# EUROPEAN PATENT SPECIFICATION

(11) **EP 1 525 253 B1**
(45) Date of publication and mention of the grant of the patent: **04.07.2007**
(21) Application number: 03762476.4
(22) Date of filing: 19.03.2003
(51) Int. Cl.: C08J 9/20, C08F 12/08

(54) **PROCESS FOR THE PREPARATION OF EXPANDABLE VINYLAROMATIC POLYMERS**
VERFAHREN ZUR HERSTELLUNG VON EXPANDIERBAREN VINYLAROMATISCHEN POLYMEREN
PROCEDE DE PREPARATION DE POLYMERES VINYLAROMATIQUES EXPANSIBLES

(30) Priority: 02.07.2002 IT MI20021448
(43) Date of publication of application: 27.04.2005
(73) Proprietor: Polimeri Europa S.p.A., 72100 Brindisi (IT)
(72) Inventor: LANFREDI, Roberto, I-46030 Virgilio (IT); ZAMPERLIN, Loris, I-46047 Porto Mantovano (IT)
(74) Representative: De Gregori, Antonella
(86) International application number: PCT/EP2003/002866
(87) International publication number: WO 2004/005384

(56) References cited:
- US-A- 4 286 069

## Description

The present invention relates to a process for the preparation of expandable vinylaromatic polymers.

More specifically, the present invention relates to a process for the preparation of expandable polystyrene.

Vinylaromatic polymers, and among these, polystyrene in particular, are known products which have been adopted for a long time for preparing compact and/or expanded articles which can be used in various applicative sectors, among which the most important are household appliances, the transport and building industries, office machines, etc. A particularly interesting sector is the field of thermal insulation, where vinylaromatic polymers are essentially used in expanded form.

These expanded products are obtained by swelling, in a pre-expander, beads of expandable polymer previously impregnated with an expanding agent and molding the swollen particles inside a closed mould by means of the contemporaneous effect of pressure and temperature. The swelling of the particles is generally effected with vapour, or another gas, maintained at a temperature slightly higher than the glass transition temperature (Tg) of the polymer.

In the preparation of expandable particles, treatment such as washing and drying at the end of the polymerization to remove any chemicals possibly present on the surface of the particles, is also known. In particular, expandable beads obtained by means of a process in aqueous suspension can be treated at the end of the polymerization to eliminate the presence of the suspending agent which "fouls" the surface of the particles, creating drawbacks. The presence of the suspending agent, in fact, leads to long drying times and also to a poor processability (for example limited adhesion in the moulding phase) during the preparation of the expanded products.

The drying, generally carried out in warm air, requires long times, as it must be effected at low temperatures, lower than 40°C, to avoid losses of expanding agent.

In patent U.S. 5,041,465, the polymerization of the particles is carried out with a finely divided calcium phosphate (TCP) as suspending agent: the removal of the TCP is effected with a treatment washing by acid products, in particular with hydrochloric acid.

Also in patent U.S. 4,793,406, the removal of the inorganic suspending agent is carried out with strong acids.

U.S. patent 4,286,069 also describes a process for the preparation in aqueous suspension of expandable beads of styrene polymers in which, when the suspending agent is an inorganic salt of phosphoric acid, for example tricalcium phosphate, the beads obtained at the end of the polymerization are washed with nitric acid.

In these cases, the drying times are brief but the use of strong acids creates serious problems for the safety of operators and plants, with considerable additional costs in the production of expandable beads.

In order to overcome the disadvantages associated with treatment/washings with acids, the use of organic suspending agents has been proposed. In patent U.S. 4,560,705, for example, inorganic suspending agents are not used, thus avoiding the use of acids for washing the particles. The drying is carried out in short times but although the suspending agent, for example sodium dodecylbenzenesulfonate, does not require a washing phase, it produces foam in the wastewater.

The presence of foam in the wastewater makes it necessary to have a specific separation plant or causes serious problems in the biological plants as the active sludge can be dragged away by the foam without decomposing the organic residues.

The drawbacks associated with these two systems of treating expandable beads are evident. In the former case, the treatment with acids requires the use of technological expedients which influence the production costs, in the latter case, the presence of foam makes any treatment of the wastewater with normal biological plants, difficult.

The Applicant has now found a system for guaranteeing a short drying time of the expandable beads of vinylaromatic polymers obtained in aqueous suspension with inorganic salts of phosphoric acid, for example tricalcium phosphate or magnesium phosphate, without coming up against the disadvantages observed in the state of the art. These salts can be added to the polymerization mixture either already finely subdivided or synthesized in situ by the reaction, for example, between sodium pyrophosphate and magnesium sulfate.

An object of the present invention therefore relates to a process for the preparation of expandable vinylaromatic polymers which comprises:
a) polymerizing in aqueous suspension at least one vinylaromatic monomer in the presence of a suspending agent selected from inorganic salts of phosphoric acid;
b) recovering the expandable beads from the reaction container;
c) washing the beads thus obtained with an aqueous solution containing 0.005-2% by weight of a non-ionic surface-active agent;
d) recovering the washed beads substantially without any inorganic salt of phosphoric acid, on the surface, and drying them in a stream of air.

According to the present invention, the polymerization process in aqueous suspension of the vinylaromatic monomer is carried out under the conditions and in the presence of additives, together with the suspending agent, well known in the art. For example, the polymerization can be carried out in the presence of an initiator system and an expanding system. The initiator system comprises two peroxides, one with a half time of an hour at 85°-95°C and the other with a half time of an hour at 110-120°C.

Any expanding agent capable of being englobed in the polymeric matrix can be used in a combination with the vinylaromatic polymers object of the present invention. In general, liquid substances are used, with a boiling point ranging from 10 to 100°C, preferably from 20 to 80°C. Typical examples are aliphatic hydrocarbons, freon, carbon dioxide, water, etc.

The expanding agent can be added to the polymer during the polymerization phase, or, alternatively, by impregnation of the beads produced at the end of the polymerization or by injection into the molten product. At the end of the addition, a polymer is obtained in the form of beads, which can be transformed to produce expanded articles with a density ranging from 5 to 50 g/1, preferably from 8 to 25 g/1, with an excellent thermal insulation capacity. In order to favour the retention of the expanding agent in the polymeric matrix, additives capable of forming bonds both of the weak type (for example hydrogen bridges) or strong type (for example acid-base adducts) can be used with the expanding agent. Examples of these additives are methyl alcohol, isopropyl alcohol, dioctylphthalate, dimethylcarbonate, compounds containing an amine group. These additives are generally added during the polymerization and/or enbodied in the polymer together with the expanding agent.

The expanding agents are preferably added during the polymerization phase and are selected from: aliphatic or cycloaliphatic hydrocarbons containing from 3 to 6 carbon atoms, such as n-pentane, iso-pentane, cyclopentane or their mixtures; halogenated derivatives of aliphatic hydrocarbons containing from 1 to 3 carbon atoms such as, for example, dichlorodifluoromethane, 1,2,2-trifluoroethane, 1,1,2-trifluoroethane; carbon dioxide and water.

The term "vinylaromatic monomer", as used in the present description and claims, essentially refers to a product which corresponds to the following general formula: 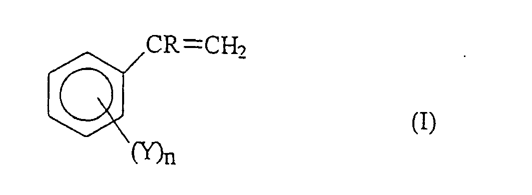 wherein n is zero or an integer ranging from 1 to 5, R is a hydrogen atom or a methyl and Y is a halogen, such as chlorine or bromine, or an alkyl or alkoxyl radical having from 1 to 4 carbon atoms.

Examples of vinylaromatic monomers having the general formula defined above are: styrene, α-methylstyrene, methylstyrene, ethylstyrene, butylstyrene, dimethylstyrene, mono-, di-, tri-, tetra- and penta-chlorostyrene, bromostyrene, methoxy-styrene, acetoxy-styrene, etc. Styrene and α-methylstyrene are the preferred vinylaromatic monomers.

The vinylaromatic monomers having general formula (I) can be used alone or in a mixture of up to 50% by weight with other copolymerizable monomers. Examples of these monomers are (meth)acrylic acid, C₁-C₄ alkyl esters of (meth)acrylic acid, such as methyl acrylate, methylmethacrylate, ethyl acrylate, ethylmethacrylate, isopropyl acrylate, butyl acrylate, amides and nitriles of (meth)acrylic acid such as acrylamide, methacrylamide, acrylonitrile, methacrylonitrile, butadiene, ethylene, divinylbenzene, maleic anhydride, etc. Preferred copolymerizable monomers are acrylonitrile and methylmethacrylate.

The vinylaromatic polymer or copolymer which is obtained has a molecular weight Mw ranging from 50,000 to 250,000, preferably from 70,000 to 200,000. In general, greater details on a process for the preparation of expandable vinylaromatic polymers in aqueous solution or, more generally, on polymerization in suspension, can be found in Journal of Macromolecular Science, Review in Macromolecular Chemistry and Physics c31 (263) 215-299 (1991) or in international patent application WO 98/51734.

Conventional additives, generally used with commercial materials, such as pigments, stabilizers, flame-retardant agents, mineral fillers of athermanous materials, antistatic agents, detaching agents, shock-resistant agents, etc., can be added to the expandable vinylaromatic polymers obtained with the process, object of the present invention. In particular, it is preferable to add during the polymerization mineral fillers of athermanous materials, such as graphite or refracting materials such as titanium dioxide, in a quantity ranging from 0.05 to 25% by weight, calculated with respect to the resulting polymer.

At the end of the polymerization, substantially spherical polymer beads are obtained, with an average diameter ranging from 0.2 to 2 mm, inside which the expanding agent is homogeneously dispersed.

To improve the stability of the suspension, it is possible to increase the viscosity of the reagent solution by dissolving the vinylaromatic polymer therein, in a concentration ranging from 1 to 30% by weight, preferably from 5 to 20%, calculated with respect to the monomer alone. The solution can be obtained either by dissolving a preformed polymer (for example fresh polymer or the waste products of previous polymerizations and/or expansions) in the reagent mixture or by pre-polymerizing the monomer, or mixture of monomers, in mass, in order to obtain the above concentrations, and then continuing the polymerization in aqueous suspension in the presence of the remaining additives.

At the end of the polymerization, the beads are discharged from the polymerization reactor and washed, in continuous or batchwise, with a solution containing the surface-active agent. The non-ionic surface-active agent is selected from alcohols/C₈-C₁₈ ethoxylated and/or propoxylated fatty acids (Empilan KCL, KCX of Huntsmann), ethoxylated and/or propoxylated glycerin ethers with an average molecular weight Mw ranging from 3500 to 5000 (Voranol 4555 of Dow), glycols condensed with ethylene oxide and/or propylene oxide, ethoxylated and/or propoxylated nonyl phenols with 0-5 units of ethylene oxide and/or propylene oxide (Empilan NP of Huntsmann), ethoxylated and/or propoxylated sorbitol with 5-20 units of ethylene oxide and/or propylene oxide (for example Armotan PN020 of ICI), fatty acids of coconut salified with K, MEA (Nansa of Huntsmann).

The main types of these surface-active agents are described in "Dispersing Powders in Liquids", Ralph D., Nelson Jr., Ed. Elsevier, 1988.

The washing generally takes place at a temperature ranging from 20 to 50°C, in stirred containers containing the surface-active agent in a concentration ranging from 0.01 to 2% by weight, preferably from 0.02 to 1%.

At the end of the polymerization and washing with the surface-active agent, the beads produced are subjected to pre-treatment generally applied to traditional materials and which essentially consists in:
1. coating the beads with a liquid antistatic agent such as amines, tertiary ethoxylated alkylamines, ethylene oxide-propylene oxide copolymers, etc. The purpose of this agent is to facilitate both the adhesion of the coating and also the screening of the beads prepared in suspension;
2. applying the coating to the above beads, said coating essentially consisting of a mixture of mono-, di- and tri-esters of glycerin (or other alcohols) with fatty acids and of metallic stearates such as zinc and/or magnesium stearate.

Some illustrative but non-limiting examples are provided for a better understanding of the present invention and for its embodiment.

### COMPARATIVE EXAMPLE 1

100 parts of styrene monomer, 0.30 parts of benzoyl peroxide, 0.15 parts of terbutylperbenzoate, 100 parts of demineralized water, 0.2 parts of tricalcium phosphate and 20 ppm of sodium dodecylbenzenesulfonate, were charged into a 2 litre reactor equipped with a stirrer.

The mixture was then heated to 90°C for 4 hours and to 125°C for a further 6 hours.

The expanding agent (7 parts of n-pentane) was added during the rise from 90 to 125°C.

At the end of the polymerization, the beads were centrifuged and subsequently washed with an equal part of demineralized water.

The beads were then centrifuged and placed in a column having a diameter of 10 cm and a height of 80 cm for drying with air at 23°C (flow-rate = 3,000 1/h). The time necessary for the drying was 40'.

0.02% of ethoxylated amine was added to the beads of expandable polymer thus produced, which were then sieved, separating the fraction with a diameter ranging from 1 to 1.5 mm.

0.25% of glycerylmonostearate and 0.05% of magnesium stearate were then added to the fraction.

The product is pre-expanded with vapour at a temperature of 100°C at a density of 15 g/l and then aged for a day.

The expanded beads were used the following day for the moulding of blocks (dimensions 1040 x 1030 x 550 mm) at a pressure of 0.5 bars, measuring the cooling time (which proved to be 12 minutes).

The blocks were then cut to prepare flat sheets on which the sintering was measured, which proved to be equal to 15%.

50 g of the mother liquor of the polymerization and washing were put into a 200 g phial and stirred for a minute to evaluate the presence of foam. The formation of foam 1 cm high was observed, which completely disappeared after resting for 10 minutes.

### COMPARATIVE EXAMPLE 2

The beads polymerized according to Comparative example 1 were centrifuged and then washed with an equal part of demineralized water containing 0.05% of sodium dodecylbenzenesulfonate.

The beads were then centrifuged and placed in a column having a diameter of 10 cm and a height of 80 cm for drying with air at 23°C (flow-rate - 3,000 1/h) . The time necessary for the drying was 11 minutes.

The additive was added to the beads thus produced, which were sieved, expanded at 15 g/l, moulded according to the same procedure adopted in comparative example 1.

The cooling time proved to be 11 minutes whereas the sintering was equal to 50%.

50 g of the mother liquor of the polymerization and washing were put into a 200 g phial and stirred for a minute to evaluate the presence of foam. The formation of persistent foam, 10 cm high, was observed. The height of the foam was still 6 cm after resting for 10 minutes.

### EXAMPLE 1

The beads polymerized according to Comparative example 1 were centrifuged and then washed with an equal part of demineralized water containing 0.05% of a non-ionic surface-active agent consisting of fatty alcohol condensed with ethylene oxide and propylene oxide, sold by Huntsman under the trade-name of Empilan 2638.

The beads were then centrifuged and placed in a column having a diameter of 10 cm and a height of 80 cm for drying with air at 23°C (flow-rate = 3,000 1/h) . The time necessary for the drying was 10 minutes.

The additive was added to the beads thus prepared, which were sieved, etc., using the same procedure adopted in Comparative example 1: the cooling time of the block proved to be 10 minutes whereas the sintering was equal to 50%.

50 g of the mother liquor of the polymerization and washing were put into a 200 g phial and stirred for a minute to evaluate the presence of foam. In this case no foam was present.

## Claims

1. A process for the preparation of expandable vinylaromatic polymers which comprises:
a) polymerizing in aqueous suspension at last one vinylaromatic monomer in the presence of a suspending agent selected from inorganic salts of phosphoric acid;
b) recovering the expandable beads from the reaction container;
c) washing the beads thus obtained with an aqueous solution containing 0.005-2% by weight of a non-ionic surface-active agent;
d) recovering the washed beads substantially without any inorganic salt of phosphoric acid, on the surface, and drying them in a stream of air.

2. The process according to claim 1, wherein the polymerization in aqueous suspension of the vinylaromatic monomer is carried out in the presence of an initiator system and an expanding agent.

3. The process according to claim 2, wherein the initiator system comprises two peroxides, one with a half time of an hour at 85-95°C and the other with a half time of an hour at 110-120°C.

4. The process according to claim 2, wherein the expanding agent capable of being englobed in the polymeric matrix consists of liquid substances with a boiling point ranging from 10 to 100°C.

5. The process according to any of the previous claims, wherein the expanding system is added in such quantities as to give a polymer in the form of beads which can be transformed to produce expanded articles having a density ranging from 5 to 50 g/l.

6. The process according to any of the previous claims, wherein the vinylaromatic monomer is selected from those having the general formula: 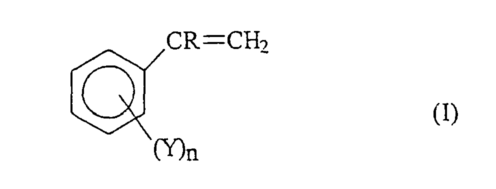 wherein n is zero or an integer ranging from 1 to 5, R is a hydrogen atom or a methyl and Y is a halogen, such as chlorine or bromine, or an alkyl or alkoxyl radical having from 1 to 4 carbon atoms.

7. The process according to any of the previous claims, wherein the non-ionic surface-active agent is selected from alcohols/C₈-C₁₈ ethoxylated and/or propoxylated fatty acids, ethoxylated and/or propoxylated glycerin ethers with an average molecular weight Mw ranging from 3500 to 5000, glycols condensed with ethylene oxide and/or propylene oxide, ethoxylated and/or propoxylated nonyl phenols with 0-5 units of ethylene oxide and/or propylene oxide, ethoxylated and/or propoxylated sorbitol with 5-20 units of ethylene oxide and/or propylene oxide, fatty acids of coconut salified with K, MEA.

8. The process according to any of the previous claims, wherein the washing takes place at a temperature ranging from 20 to 50°C, in stirred containers containing the surface-active agent in a concentration ranging from 0.005 to 2% by weight, preferably from 0.02 to 1%.

## Patentansprüche

1. Verfahren zur Herstellung eines expandierbaren vinylaromatischen Polymers umfassend:
a) Polymerisieren von wenigstens einem vinylaromatischen Monomer in einer wässrigen Lösung in der Gegenwart eines Suspendiermittels ausgewählt aus anorganischen Salzen von Phosphorsäure,
b) Sammeln der expandierbaren Kugeln aus dem Reaktionsbehälter,
c) Waschen der so erhaltenen Kugeln mit einer wässrigen Lösung enthaltend 0,005 bis 2 Gew.-% eines nichtionischen Tensids,
d) Sammeln der gewaschenen Kugeln im Wesentlichen ohne jegliches anorganisches Salz von Phosphorsäure auf der Oberfläche und Trocknen derselben in einem Luftstrom.

2. Verfahren nach Anspruch 1, wobei die Polymerisation des vinylaromatischen Monomers in wässriger Suspension in der Gegenwart eines Initiatorsystems sowie eines Expansionsmittels durchgeführt wird.

3. Verfahren nach Anspruch 2, wobei das Initiatorsystem zwei Peroxide enthält, von denen eines eine Halbwertszeit von einer Stunde bei 85 bis 95 °C und das andere eine Halbwertszeit von einer Stunde bei 110 bis 120 °C aufweist.

4. Verfahren nach Anspruch 2, wobei das Expansionsmittel, das dazu fähig ist, in der Polymermatrix eingebettet zu werden, aus flüssigen Verbindungen mit einem Siedepunkt in einem Bereich zwischen 10 und 100 °C besteht.

5. Verfahren nach einem der vorhergehenden Ansprüche, wobei das Expansionssystem in solchen Mengen zugefügt wird, um ein Polymer in der Form von Kugeln zu ergeben, welche transformiert werden können, um expandierte Gegenstände mit einer Dichte in einem Bereich zwischen 5 und 50 g/l herzustellen.

6. Verfahren nach einem der vorhergehenden Ansprüche, wobei das vinylaromatische Monomer ausgewählt ist aus solchen mit der allgemeinen Formel: 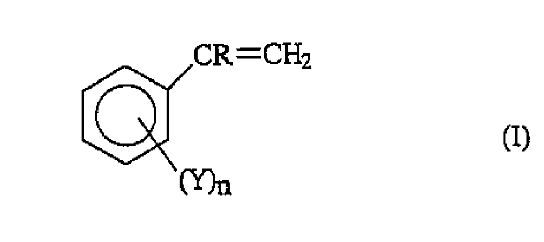 worin n Null ist oder eine ganze Zahl in einem Bereich zwischen 1 und 5 ist, R ein Wasserstoffatom oder ein Methyl ist und Y ein Halogen ist, wie beispielsweise Chlor oder Brom, oder ein Alkyl- oder ein Alkoxylradikal mit 1 bis 4 Kohlenstoffatomen.

7. Verfahren nach einem der vorhergehenden Ansprüche, wobei das nichtionische Tensid ausgewählt ist aus Alkoholen/C₈-C₁₈ ethoxylierten und/oder propoxylierten Fettsäuren, ethoxylierten und/oder propoxylierten Glycerinethern mit einem durchschnittlichen Molekulargewicht M_{w} in einem Bereich zwischen 3.500 und 5.000, Glykolen kondensiert mit Ethylenoxid und/oder Propylenoxid, ethoxylierten und/oder propoxylierten Nonylphenolen mit 0 bis 5 Einheiten an Ethylenoxid und/oder Propylenoxid, ethoxyliertem und/oder propoxyliertem Sorbit mit 5 bis 20 Einheiten an Ethylenoxid und/oder Propylenoxid, Kokosnußfettsäuren als Salz mit K, MEA.

8. Verfahren nach einem der vorhergehenden Ansprüche, wobei das Waschen bei einer Temperatur in einem Bereich zwischen 20 und 50 °C in einem Rührbehälter, welcher das Tensid in einer Konzentration in einem Bereich zwischen 0,005 und 2 Gew.-%, vorzugsweise zwischen 0,02 und 1 Gew.-%, enthält, stattfindet.

## Revendications

1. Procédé de préparation de polymères vinyle aromatiques pouvant être expansés qui comprend les étapes consistant à :
a) polymériser en suspension aqueuse au moins un monomère vinyle aromatique en présence d'un agent de suspension choisi parmi les sels inorganiques de l'acide phosphorique ;
b) récupérer les billes pouvant être expansées du conteneur de réaction;
c) laver les billes ainsi obtenues avec une solution aqueuse contenant 0,005 à 2 % en poids d'un agent tensioactif non ionique ;
d) récupérer les billes lavées sensiblement sans aucun sel inorganique d'acide phosphorique, sur la surface, et les sécher dans un courant d'air.

2. Procédé selon la revendication 1, dans lequel la polymérisation en suspension aqueuse du monomère vinyle aromatique est réalisée en présence d'un système initiateur ou d'un agent d'expansion.

3. Procédé selon la revendication 2, dans lequel le système d'initiateur comprend deux peroxydes, un avec un demi-temps d'une heure à 85 à 95 °C et l'autre avec un demi-temps d'une heure à 110 à 120 °C.

4. Procédé selon la revendication 2, dans lequel l'agent d'expansion capable d'être englobé dans la matrice polymère consiste en des substances liquides avec un point d'ébullition variant de 10 à 100 °C.

5. Procédé selon l'une quelconque des revendications précédentes, dans lequel le système d'expansion est ajouté en des quantités telles à donner un polymère sous la forme de billes qui peuvent être transformées pour produire des articles expansés ayant une masse volumique variant de 5 à 50 g/L.

6. Procédé selon l'une quelconque des revendications précédentes, dans lequel le monomère vinyle aromatique est choisi parmi ceux répondant à la formule générale : 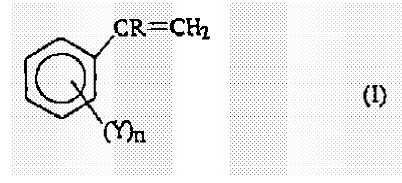 dans laquelle n vaut zéro ou un nombre entier variant de 1 à 5, R est un atome d'hydrogène ou un groupe méthyle et Y est un atome d'halogène, tel que le chlore ou le brome, ou un radical alkyle ou alcoxyle comportant 1 à 4 atomes de carbone.

7. Procédé selon l'une quelconque des revendications précédentes, dans lequel l'agent tensioactif non ionique est choisi parmi les alcools/acides gras éthoxylés en C₈ à C₁₈ et/ou propoxylés, les éthers de glycérine éthoxylés et/ou propoxylés avec une masse moléculaire moyenne Mw variant de 3 500 à 5 000, les glycols condensés avec de l'oxyde éthylène et/ou de l'oxyde propylène, les nonyl phénols éthoxylés et/ou propoxylés avec 0 à 5 motifs d'oxyde éthylène et/ou d'oxyde propylène, le sorbitol éthoxylé et/ou propoxylé avec 5 à 20 motifs d'oxyde éthylène et/ou d'oxyde propylène, les acides gras de noix de coco salifiés avec K, MEA.

8. Procédé selon l'une quelconque des revendications précédentes, dans lequel le lavage a lieu à une température variant de 20 à 50 °C, dans des conteneurs agités contenant l'agent tensioactif en une concentration variant de 0,005 à 2 % en poids, de préférence de 0,02 à 1 %.
